# EUROPÄISCHE PATENTSCHRIFT

(11) **EP 1 358 039 B1**
(45) Veröffentlichungstag und Bekanntmachung des Hinweises auf die Patenterteilung: **20.10.2004**
(21) Anmeldenummer: 02718090.0
(22) Anmeldetag: 05.02.2002
(51) Int. Cl.: B23P 19/06

(54) **SCHRAUBSTATION**
SCREWING STATION
STATION DE VISSAGE

(30) Priorität: 09.02.2001 DE 10106037
(43) Veröffentlichungstag der Anmeldung: 05.11.2003
(73) Patentinhaber: ZF FRIEDRICHSHAFEN AG, 88038 Friedrichshafen (DE)
(72) Erfinder: ALBRECHT, Elmar, 88069 Tettnang (DE); SCHLEIER, Markus, 88069 Tettnang (DE); SEEBERGER, Gottfried, 88046 Friedrichshafen (DE); PLACHTA, Rudolf, 88046 Friedrichshafen (DE); MAIER, Holger, Thomas, 88239 Wangen (DE); REDDIG, Jürgen, 88069 Tettnang (DE)
(86) Internationale Anmeldenummer: PCT/EP2002/001145
(87) Internationale Veröffentlichungsnummer: WO 2002/064306

(56) Entgegenhaltungen:
- DE-A- 19 846 947
- JP-A- 6 091 450
- JP-A- 60 238 242

## Beschreibung

Die Erfindung betrifft eine Schraubstation zur automatisierten Verschraubung von Getriebegehäusen nach dem Oberbegriff von Anspruch 1.

Industriell gefertigte Getriebe werden in Produktionsstraßen aus einer Vielzahl von Einzelbauteilen zusammengefügt. Im Endstadium der Montage der Getriebe werden die Gehäuseverschraubungen in einer großen Anzahl auf ein vorgeschriebenes Anzugsmoment gebracht, wodurch im wesentlichen auch ein verzugsfreier und flüssigkeitsdichter Zusammenbau gewährleistet werden soll. Beim Zusammenfügen der einzelnen Gehäuseteile eines vielgängigen Schaltgetriebes, insbesondere auch für Nutzfahrzeuge, sind häufig mehr als 30 Verschraubungen anzubringen und festzuziehen. In der industriellen Praxis werden die Verschraubungen entweder individuell von Hand angezogen oder es sind auf Traversen montierte Einzelschrauber im Einsatz, die eine in einer vorbestimmten und festen Position angeordnete Verschraubung am Getriebegehäuse festziehen können. Durch die feste Montage des Schraubers bezüglich der Position der Verschraubung muß für jede Verschraubung praktisch ein eigener Schrauber vorgesehen sein, der jeweils einen erheblichen Kostenfaktor darstellt. Die Anzahl der auf einer Traverse zu montierenden Schrauber ist räumlich begrenzt, so daß bei einer veränderten Anordnung der Verschraubungen eine neue Traverse installiert werden muß. Manuell zu bedienende Schrauber sind beispielsweise aus der DE 19846947 bekannt, bei der auch eine Überwachung des Schraubprozesses stattfindet.

Der Erfindung liegt die Aufgabe zugrunde, eine prozesssichere Einrichtung zur Verschraubung von Getriebegehäusen zu schaffen.

Die Aufgabe wird gelöst durch eine Schraubstation mit den Merkmalen des Anspruchs 1. Ausgestaltungen sind Gegenstand von Unteransprüchen.

Nach der Erfindung wird eine Schraubstation zur Verschraubung von Getriebegehäusen vorgeschlagen, bei der eine Anschlußplatte vorgesehen ist, die mit dem Getriebegehäuse lösbar verbunden ist. An der Anschlußplatte ist eine erste Führung angeordnet, an der entlang auf einer ersten Achse eine zweite Führung relativ zur Anschlußplatte bewegbar ist. An der zweiten Führung ist eine dritte Führung angeordnet, die entlang einer zur ersten Achse rechtwinklig liegenden zweiten Achse relativ zur Anschlußplatte bewegbar ist und die einem Schrauber eine Bewegung entlang einer zur zweiten Achse rechtwinklig liegenden dritten Achse relativ zur Anschlußplatte ermöglicht, so daß der Schrauber die festzudrehende Verschraubung erreicht.

In einer Ausführungsform ist die dritte Führung auf der dritten Achse relativ zur Anschlußplatte bewegbar und in einer anderen Ausführungsform ist der Schrauber entlang der dritten Führung auf der dritten Achse relativ zur Anschlußplatte bewegbar. Eine Ausführung zeigt Führungen, die von elektrischen Motoren einzeln angetrieben sind. In einer Ausgestaltung werden die elektrischen Motoren der Führungen und der Schrauber von einer Steuereinrichtung angesteuert, die in der Schraubstation integriert ist. In einer Ausführung ist die Steuereinrichtung derart programmierbar, daß an vorher festgelegten Positionen die Verschraubungen von dem Schrauber angesteuert werden und mit einem vorgegebene Moment angezogen werden. Bei einer Ausgestaltung befinden sich die Führungen innerhalb einer Schutzeinrichtung und der Schrauber bewegt sich lediglich innerhalb dieser Schutzeinrichtung, durch die in einer Ausführungaform hindurch gegriffen werden kann. Vorzugsweise behält der Schrauber seine Rotationsachse während der Ansteuerung der verschiedenen Verschraubungen des Getriebegehäuses ständig bei. Bei einer Ausführung ist der verwendete Schrauber ein elektrisch betriebener Schrauber und bei einer Ausführung ist es ein pneumatisch betriebener Schrauber ist, wobei dann auch die elektrischen Motoren der Führungen und die Luftzuführung des pneumatisch betriebenen Schraubers von der Steuereinrichtung gesteuert werden können, die in der Schraubstation integriert ist.

Als Schrauber wird beispielsweise ein handelsüblicher Schrauber verwendet, dessen Drehmoment einstellbar ist, der eine Drehmomentüberwachung aufweist, der die geleisteten Umdrehungen während eines Schraubprozesses registrieren kann und dessen Drehzahl stufenlos regulierbar ist. Die Führungen beispielsweise sind gebildet durch hochgenaue Lineareinheiten mit AC-Servomotoren, inkrementalen Drehimpulsgebern, Endschaltern und Bremsen.

Von dem Einrichter der Schraubstation wird die Position jeder Schraube und das erforderliche Anzugsdrehmoment in der Steuereinrichtung vorgegeben. Dazu kann der Einrichter die Position entweder über ein Koordinatensystem relativ zur Anschlußplatte einprogrammieren oder er bewegt den Schrauber manuell an die gewünschte Position und läßt die Steuereinrichtung über diese manuelle Bewegung die richtige Position erlernen. Dazu kann der Einrichter durch die Schutzeinrichtung hindurchgreifen, um an den Schrauber zu gelangen. Für einen Getriebetyp bleiben die eingestellten Positionen jeweils gleich. Das wird über die jeweilige Anschlußplatte für den Getriebetyp sichergestellt, die immer an der gleichen Stelle am jeweiligen Getriebegehäuse befestigt wird. Bei der Bedienung werden in dem Getriebegehäuse die Verschraubungen in den Gewindebohrungen eingesetzt und die Schraubstation in Betrieb genommen. Nacheinander fährt der Schrauber die unterschiedlichen Verschraubungen an, dreht diese fest und wechselt zur nächsten Verschraubung. Nach Fertigstellung aller Verschraubungen findet eine entsprechende Meldung über den Abschluß des Prozesses an die Bedienperson statt, beispielsweise durch eine farbige Signallampe. Wenn im Betrieb eine Verschraubung als nicht in Ordnung erkannt wird, weil beispielsweise das erforderliche Drehmoment nicht erreicht werden kann oder eine nicht ausreichende Anzahl von Umdrehungen erkannt wird, wird diese Störung der Bedienperson ebenfalls gemeldet und nach einer entsprechenden Quittierung wird die Verschraubung wieder herausgedreht. Anschließend geht die Schraubstation automatisch zur nächsten Verschraubung über. Nach Abschluß aller Verschraubungen und entsprechender Meldung erkennt die Bedienperson anhand der nicht eingedrehten Verschraubungen, welche Verschraubungen von ihr kontrolliert werden müssen und gegebenenfalls manuell angezogen werden müssen.

Die Erfindung wird anhand einer Zeichnung näher erläutert.

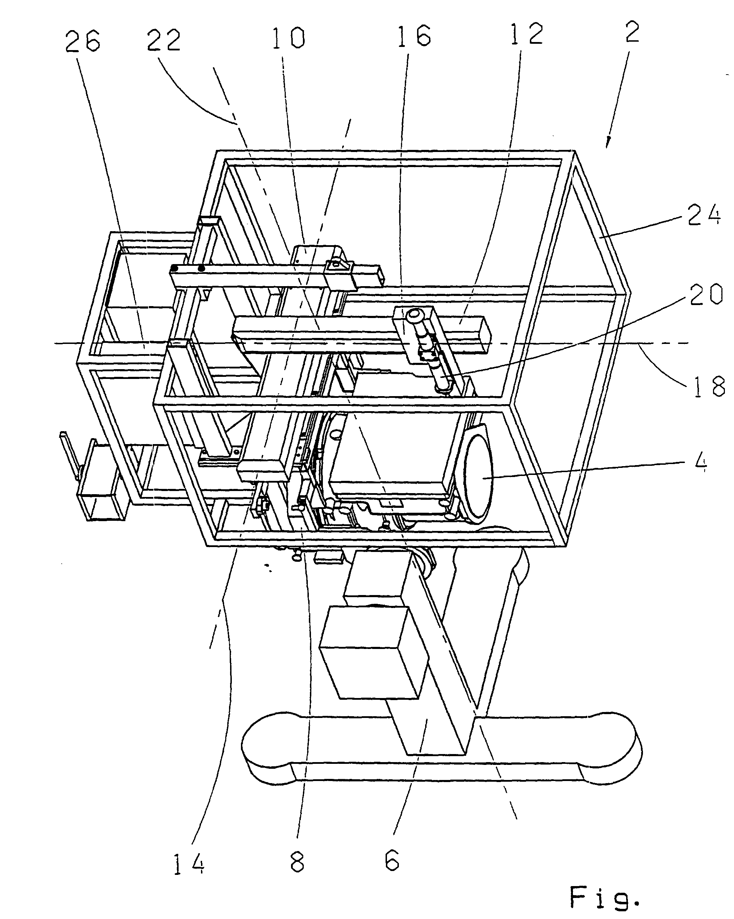

Die Figur zeigt eine Schraubstation 2, die auf einem Getriebegehäuse 4 aufgesetzt ist. Das Getriebegehäuse selbst ist auf einem fahrbaren Montagewagen 6 montiert, auf dem es in einer Prozesskette in den Bereich der Schraubstation 2 gefahren wird. Auf dem Montagewagen 6 ist das Getriebegehäuse 4 drehbar montiert, so daß es von einer Bedienperson so in eine Position gedreht werden kann, das eine Anschlussplatte 8 an dem Getriebegehäuse 4 lösbar befestigt werden kann, beispielsweise mit geeigneten und hier nicht gezeigten Klemmvorrichtungen festgeklemmt werden kann. An der Anschlussplatte 8 ist eine erste Führung 10 fest angeordnet. Rechtwinklig zu der ersten Führung 10 ist an der ersten Führung 10 eine zweite Führung 12 vorgesehen, die an der ersten Führung 10 entlang einer ersten Achse 14 relativ zur Anschlußplatte 8 bewegbar ist. Rechtwinklig zu der zweiten Führung 12 ist an der zweiten Führung 12 eine dritte Führung 16 vorgesehen, die an der zweiten Führung 12 entlang einer zweiten Achse 18 relativ zur Anschlußplatte 8 bewegbar ist. An der dritten Führung 16 ist ein Schrauber 20 befestigt, der an der dritten Führung 16 entlang einer dritten Achse 22 relativ zur Anschlussplatte 8 bewegbar ist. Alternativ kann auch die dritte Führung 16 so an der zweiten Führung 12 angeordnet sein, daß sich die dritte Führung 16 selbst entlang der dritten Achse 22 bewegt. Durch diese in drei Dimensionen bewegbare Anordnung des Schraubers 20 kann der Schrauber 20 alle Verschraubungen des Getriebegehäuses, die innerhalb des Verstellweges der dritten Führung 16 entlang der Achse 22 liegen, erreichen. Der Schrauber 20 behält dabei die Rotationsachse ständig bei. An der ersten Führung 10 ist ein Schutzrahmen 24 vorgesehen, der alle Führungen 10, 12, 16 und den Schrauber 20 umgibt, so daß das Bedienpersonal bei der automatischen Bewegung des Schraubers 20 nicht verletzt werden kann. Ebenfalls an der Führung 10 ist die elektronische Steuereinrichtung 26 angeordnet, die mit dem Schrauber und den Führungen 10, 12, 16 in Verbindung steht und diese ansteuert.

Die vorgeschlagene Schraubstation 2 erlaubt eine automatisierte Montage eines Getriebegehäuses 4 mit einem Druckluft- oder Elektroschrauber 20 für eine beliebig große Anzahl von Verschraubungen. Während der Taktzeit der durchgeführten Schraubvorgänge für ein Getriebegehäuse 4 kann die Bedienperson der Schraubstation 2 andere Tätigkeiten wahrnehmen. Der erforderliche Platzbedarf für die Schraubstation 2 ist gering und unwesentlich größer als das Getriebegehäuse 4 selbst. Der Platzbedarf ist aber nicht zu vergleichen und wesentlich geringer als der Platzbedarf für einen Industrieroboter, wobei auch die Kosten der beiden Systeme sehr stark differieren. Die Schraubstation 2 ist einfach zu bedienen und das Handling ist von einem geschulten Bedienpersonal schnell erlernbar.

### Bezugszeichen

- 2: Schraubstation
- 4: Getriebegehäuse
- 6: Montagewagen
- 8: Anschlussplatte
- 10: erste Führung
- 12: zweite Führung
- 14: erste Achse
- 16: dritte Führung
- 18: zweite Achse
- 20: Schrauber
- 22: dritte Achse
- 24: Schutzrahmen
- 26: Steuereinrichtung

## Patentansprüche

1. Schraubstation (2) zur Verschraubung von Getriebegehäusen (4), **dadurch gekennzeichnet, daß** eine Anschlußplatte (8) vorgesehen ist, die mit dem Getriebegehäuse (4) lösbar verbunden ist und an der eine erste Führung (10) angeordnet ist, an der entlang auf einer ersten Achse (14) eine zweite Führung (12) relativ zur Anschlußplatte (8) bewegbar ist, und daß an der zweiten Führung (12) eine dritte Führung (16) angeordnet ist, die entlang einer zur ersten Achse (14) rechtwinklig liegenden zweiten Achse (18) relativ zur Anschlußplatte (8) bewegbar ist und die einem Schrauber (20) eine Bewegung entlang einer zur zweiten Achse (18) rechtwinklig liegenden dritten Achse (22) relativ zur Anschlußplatte (8) ermöglicht.

2. Schraubstation (2) nach Anspruch 1, **dadurch gekennzeichnet, daß** die dritte Führung (16) auf der dritten Achse (22) relativ zur Anschlußplatte (8) bewegbar ist.

3. Schraubstation (2) nach Anspruch 1, **dadurch gekennzeichnet, daß** der Schrauber (20) entlang der dritten Führung (16) auf der dritten Achse (22) relativ zur Anschlußplatte (8) bewegbar ist.

4. Schraubstation (2) nach einem der Ansprüche 1 bis 3, **dadurch gekennzeichnet, daß** die Führungen (10, 12, 16) von elektrischen Motoren einzeln angetrieben sind.

5. Schraubstation (2) nach Anspruch 4, **dadurch gekennzeichnet, daß** die elektrischen Motoren der Führungen (10, 12, 16) und der Schrauber (20) von einer Steuereinrichtung (26) angesteuert werden, die in der Schraubstation (2) integriert ist.

6. Schraubstation (2) nach Anspruch 5, **dadurch gekennzeichnet, daß** die Steuereinrichtung (26) derart programmierbar ist, daß an vorher festgelegten Positionen die Verschraubungen von dem Schrauber (20) angesteuert werden und mit einem vorgegebene Moment angezogen werden.

7. Schraubstation (2) nach einem der Ansprüche 1 bis 6, **dadurch gekennzeichnet, daß** sich die Führungen (10, 12, 16) innerhalb einer Schutzeinrichtung (24) befinden und der Schrauber (20) sich lediglich innerhalb der Schutzeinrichtung (24) bewegt.

8. Schraubstation (2) nach Anspruch 7, **dadurch gekennzeichnet, daß** die Schutzeinrichtung (24) durchgreifbar ist.

9. Schraubstation (2) nach einem der Ansprüche 1 bis 8, **dadurch gekennzeichnet, daß** der Schrauber (20) seine Rotationsachse während der Ansteuerung der verschiedenen Verschraubungen des Getriebegehäuses (4) ständig beibehält.

10. Schraubstation (2) nach einem der Ansprüche 1 bis 9, **dadurch gekennzeichnet, daß** der Schrauber (20) ein elektrisch betriebener Schrauber ist.

11. Schraubstation (2) nach einem der Ansprüche 1 bis 9, **dadurch gekennzeichnet, daß** der Schrauber (20) ein pneumatisch betriebener Schrauber ist.

12. Schraubstation (2) nach Anspruch 11, **dadurch gekennzeichnet, daß** die elektrischen Motoren der Führungen (10, 12, 16) und die Luftzuführung des pneumatisch betriebenen Schraubers (20) von der Steuereinrichtung (26) angesteuert werden, die in der Schraubstation (2) integriert ist.

13. Verfahren zur Montage von Getriebegehäusen (4), **dadurch gekennzeichnet, daß** in einer an dem Getriebegehäuse (4) mit einer Anschlußplatte (8) lösbar befestigten Schraubstation (2) von einem dreidimensional bewegbaren Schrauber (20) vor der Montage einprogrammierte, unterschiedliche Positionen von Verschraubungen des Getriebegehäuses (4) angefahren werden und mit einem vorgegebenen Drehmoment angezogen werden.

## Claims

1. Bolting station (2) for the bolting of transmission housings (4), **characterized in that** a connecting plate (8) is provided, which is separably connected to the transmission housing (4) and has a first guiding device (10) arranged on it, on which along a first axis (14) a second guiding device (12) is movable relative to the connecting plate (8), and that the second guiding device (12) has a third guiding device (16) arranged on it, which along a second axis (18) perpendicular to the first axis (14) is movable relative to the connecting plate (8) and permits movement of a nutsetter (20) along a third axis (22) perpendicular to the second axis (18) and relative to the connecting plate (8).

2. Bolting station (2) according to claim 1, **characterized in that** the third guiding device (16) on the third axis (22) is movable relative to the connecting plate (8).

3. Bolting station (2) according to claim 1, **characterized in that** the nutsetter (20) is movable along the third guiding device (16) on the third axis (22) relative to the connecting plate (8).

4. Bolting station (2) according to one of the claims 1 through 3, **characterized in that** the guiding devices (10, 12, 16) are individually driven by electric motors.

5. Bolting station (2) according to claim 4, **characterized in that** the electric motors of the guiding devices (10, 12, 16) and the nutsetter (20) are controlled by control device (26) integrated into the bolting station (2).

6. Bolting station (2) according to claim 5, **characterized in that** the control device (26) is programmable in such a way that the bolts are set by the nutsetter (20) in preset positions and at a preset torque value.

7. Bolting station (2) according to one of the claims 1 through 6, **characterized in that** the guiding devices (10, 12, 16) are arranged within a protective device (24) and the nutsetter (20) moves within the protective device (24) only.

8. Bolting station (2) according to claim 7, **characterized in that** the protective device (24) can be reached through.

9. Bolting station (2) according to one of the claims 1 through 8, **characterized in that** the nutsetter (20) maintains its axis of rotation while setting the various bolts of the transmission housing (4).

10. Bolting station (2) according to one of the claims 1 through 9, **characterized in that** the nutsetter (20) is electrically driven.

11. Bolting station (2) according to one of the claims 1 through 9, **characterized in that** the nutsetter (20) is pneumatically driven.

12. Bolting station (2) according to claim 11, **characterized in that** the electric motors of the guiding devices (10, 12, 16) and the air supply of the pneumatically driven nutsetter (20) are controlled by the control device (26) integrated into the bolting station (2).

13. Method for assembling transmission housings (4), **characterized in that** a bolting station (2) is separably fixed to the transmission housing (4) by means of a connecting plate (8) and that in said bolting station a three-dimensionally movable nutsetter (20) sets the bolts on the transmission housing (4) in the positions and at the torque levels programmed prior to assembly.

## Revendications

1. Station de vissage (2) pour le vissage de carters de transmissions (4), **caractérisée en ce qu'**il est prévu une plaque de raccordement (8) qui est reliée de façon démontable au carter de transmission (4) et sur laquelle est disposé un premier guidage (10) le long duquel un deuxième guidage (12) peut se déplacer par rapport à la plaque de raccordement (8), sur un premier axe (14), et **en ce que**, sur le deuxième guidage (12) est disposé un troisième guidage (16) qui peut se déplacer par rapport à la plaque de raccordement (8) le long d'un deuxième axe (18) qui s'étend perpendiculairement au premier axe (14), et qui permet à une visseuse (20) de décrire un mouvement par rapport à la plaque de raccordement (8) le long d'un troisième axe (22) qui s'étend perpendiculairement au deuxième axe (18).

2. Station de vissage (2) selon la revendication 1, **caractérisée en ce que** le troisième guidage (16) peut se déplacer sur le troisième axe (22) par rapport à la plaque de raccordement (8).

3. Station de vissage (2) selon la revendication 1, **caractérisée en ce que** la visseuse (20) peut se déplacer par rapport à la plaque de raccordement (8) sur le troisième axe (22), le long du troisième guidage (16).

4. Station de vissage (2) selon l'une des revendications 1 à 3, **caractérisée en ce que** les guidages (10, 12, 16) peuvent être entraînés individuellement par des moteurs électriques.

5. Station de vissage (2) selon la revendication 4, **caractérisée en ce que** les moteurs électriques des guidages (10, 12, 16) et la visseuse (20) sont commandés par un dispositif de commande (26) qui est intégré dans la station de vissage (2).

6. Station de vissage (2) selon la revendication 5, **caractérisée en ce que** le dispositif de commande (26) peut être programmé de manière que les vissages puissent être exécutés par la visseuse (20) dans des positions fixées au préalable et être serrés avec un couple prédéterminé.

7. Station de vissage (2) selon l'une des revendications 1 à 6, **caractérisée en ce que** les guidages (10, 12, 16) se trouvent à l'intérieur d'un dispositif de protection (24) et la visseuse (20) se déplace exclusivement à l'intérieur du dispositif de protection (24).

8. Station de vissage (2) selon la revendication 7, **caractérisée en ce que** le dispositif de protection (24) peut être traversé.

9. Station de vissage (2) selon l'une des revendications 1 à 8, **caractérisée en ce que** la visseuse (20) conserve son axe de rotation dans une attitude fixe pendant la commande des différents vissages du carter de transmission (4).

10. Station de vissage (2) selon l'une des revendications 1 à 9, **caractérisée en ce que** la visseuse (20) est une visseuse actionnée électriquement.

11. Station de vissage (2) selon l'une des revendications 1 à 9, **carac-térisée en ce que** la visseuse (20) est une visseuse actionnée pneumatiquement.

12. Station de vissage (2) selon la revendication 11, **caractérisée en ce que** les moteurs électriques des guidages (10, 12, 16) et l'alimentation en air de la visseuse (20) actionnée pneumatiquement sont commandés par le dispositif de commande (26) qui est intégré dans la station de vissage (2).

13. Procédé de montage de carters de transmissions (4), **caractérisé en ce que**, dans une station de vissage (2) qui est fixée de façon démontable au carter de transmission (4) au moyen d'une plaque de raccordement (8), avec une visseuse (20) programmée avant le montage qui peut se déplacer dans les trois dimensions, différentes positions de vissage des carters de transmission (4) peuvent être atteintes et les vissages peuvent être serrés avec un couple prédéterminé.
